# FASCICULE DE BREVET EUROPEEN

(11) **EP 0 797 752 B1**
(45) Date de publication et mention de la délivrance du brevet: **09.02.2000**
(21) Numéro de dépôt: 95934182.7
(22) Date de dépôt: 06.10.1995
(51) Int. Cl.: F25B 17/08, F25B 35/04

(54) **PROCEDE ET DISPOSITIF FRIGORIGENES**
KÄLTE-VERFAHREN UND -VORRICHTUNG
REFRIGERATING METHOD AND DEVICE

(43) Date de publication de la demande: 01.10.1997
(73) Titulaire: MANUFACTURE DE VETEMENTS PAUL BOYE S.A., 34200 Sète (FR)
(72) Inventeur: SPINNER, Bernard, F-66200 Corneilla-del-Vercol (FR); BOYE, Philippe, F-34200 Sète (FR); HEINRY, Didier, F-66000 Perpignan (FR)
(74) Mandataire: Colas, Jean-Pierre
(86) Numéro de dépôt international: FR9501307
(87) Numéro de publication internationale: WO9714004

(56) Documents cités:
- DE-C- 442 923
- FR-A- 744 759
- FR-A- 982 202
- FR-A- 2 172 754
- FR-A- 2 393 246
- FR-A- 2 489 488
- FR-A- 2 719 367
- US-A- 1 729 083
- US-A- 2 253 907
- US-A- 4 126 016
- US-A- 5 165 247
- US-A- 5 167 498
- US-A- 5 207 073

## Description

L'invention concerne un procédé et un dispositif frigorigènes.

Il existe un besoin pour un dispositif frigorigène léger, portable et non-électrique dans divers domaines tels que les réfrigérateurs portables, les vêtements réfrigérés, etc...

On a déjà proposé de produire du froid par adsorption de CO₂ sur une matière adsorbante, puis désorption du gaz adsorbé. EP-A-0 523 849 décrit un dispositif, basé sur ce principe, constitué d'un cylindre contenant une matière adsorbante et un gaz compressible (tel que CO₂), et d'un piston actionné par un compresseur pour compresser le gaz afin de le faire adsorber par la matière adsorbante. Lorsqu'on rétracte le piston, le gaz se désorbe et produit du froid. Par des compressions et décompressions successives, on crée une zone froide et une zone chaude dans la masse de matière adsorbante. Des moyens (ailettes) sont prévus pour refroidir la zone chaude et véhiculer les frigories de la zone froide vers une enceinte à réfrigérer.

Ce dispositif, qui nécessite un compresseur pour actionner le piston, souffre d'être lourd et encombrant. Il ne s'agit manifestement pas d'un dispositif frigorigène conçu pour être léger et portable.

Egalement, la Demanderesse revendique, dans la demande de brevet français No. 93 09348 déposée le 29 Juillet 1993, un dispositif de production de froid par adsorption/désorption de CO₂ comprenant au moins une enceinte garnie d'une matière solide adsorbante, caractérisé en ce que cette matière adsorbante comprend des fibres de carbone activé ou un charbon actif et présente une surface spécifique d'au moins 700 m²/g et une surface spécifique externe d'au moins 0,005 m²/g. Egalement, la demande précitée décrit spécifiquement des systèmes frigorigènes à simple effet ou à résorption nécessitant la mise en oeuvre de deux enceintes interconnectées, et de moyens de chauffage, et qui ne se prêtent donc pas à la réalisation de systèmes légers et portables.

Le document US-A-1 729 083 décrit un procédé de production de froid par évaporation et adsorption des vapeurs par une matière adsorbante contenue dans un réservoir.

Le besoin pour un procédé de production de froid pouvant être mis en oeuvre dans des dispositifs légers et portables n'a donc pas été satisfait jusqu'à présent.

L'invention concerne un nouveau procédé de production de froid par désorption d'un gaz préalablement adsorbé dans une matière adsorbante contenue dans un réservoir, caractérisé en ce qu'on désorbe le gaz sous une pression contrôlée supérieure à la pression atmosphérique et en ce que le gaz désorbé est déchargé à l'atmosphère ou capté dans un piège.

Contrairement aux procédés antérieurs, le gaz désorbé n'est ni réutilisé, ni transféré dans une autre enceinte pour être ultérieurement recyclé, et cette particularité autorise la réalisation de dispositifs frigorigènes qui sont simples, légers et portables.

Par "pression contrôlée" on veut dire une pression constante ou sensiblement constante ou encore une pression variable dont la variation est régulée en fonction d'un paramètre donné, notamment de la température du dispositif mettant en oeuvre ledit procédé ou de l'article ou enceinte refroidi par le froid généré au moyen d'un dispositif mettant en oeuvre le présent procédé.

La désorption du gaz est effectuée sous une pression contrôlée supérieure à la pression atmosphérique afin d'éviter que de l'air puisse rentrer dans le réservoir contenant la matière adsorbante.

La présente invention concerne aussi un dispositif frigorigène qui est léger, portable, et est d'une réalisation simple.

Plus particulièrement, l'invention concerne un dispositif frigorigène comprenant un réservoir tenant la pression garni d'une matière adsorbante dans lequel le froid est produit par désorption d'un gaz préalablement adsorbé dans ladite matière adsorbante, caractérisé en ce qu'il comprend, en outre, une soupape à tare ajustable dont le passage communique, d'une part, avec l'intérieur du réservoir et, d'autre part, directement avec l'extérieur, et des moyens pour mettre ledit réservoir temporairement en communication avec une source sous pression de gaz adsorbable par ladite matière adsorbante.

Selon un mode de réalisation particulier, lesdits moyens consistent en un raccord rapide du type auto-obturant en deux parties dont une des parties est fixée au réservoir et l'autre partie est fixée à la soupape, de façon que le réservoir puisse être déconnecté de la soupape et connecté à ladite source sous pression pour être rempli de gaz adsorbable.

En variante, on pourrait aussi utiliser un système de recharge du type à percussion, c'est-à-dire du type comprenant une aiguille dont le canal est relié par l'intermédiaire d'un clapet ou similaire à la chambre délimitée par le réservoir et une membrane prévue sur une source de gaz adsorbable sous pression et que l'on vient transpercer par l'aiguille lorsqu'on désire "recharger" le réservoir.

De préférence, le gaz adsorbable est du dioxyde de carbone (CO₂) et la sortie de la soupape débouche directement à l'atmosphère.

En variante, le gaz adsorbable pourrait être de l'ammoniac (NH₃), auquel cas la sortie de la soupape déboucherait dans un piège à eau destiné à absorber l'ammoniac désorbé et à éviter ou minimiser fortement son dégagement dans l'atmosphère.

Egalement, on peut envisager d'utiliser un système à plusieurs substances adsorbées afin de fonder la production de froid sur deux ou plusieurs systèmes enthalpiques (co-adsorption) au lieu d'un. Un exemple d'un tel système est le système dioxyde de carbone-eau.

Le réservoir du dispositif de l'invention doit être capable de tenir la pression du gaz adsorbable introduit. Par exemple le réservoir peut être réalisé en un métal tel que l'acier ou en un matériau composite bon conducteur de la chaleur, par exemple en matière polymère chargée de fibres métalliques.

Avantageusement, le réservoir a une forme allongée, sensiblement cylindrique, pour offrir une grande surface d'échange thermique.

De préférence, également, pour garantir un bon accès du gaz adsorbable à la totalité de la masse de matière adsorbante remplissant le réservoir, on prévoit l'orifice d'entrée du gaz adsorbable à une extrémité du réservoir, et on ménage un chemin d'accès pour le gaz en disposant un petit tube perforé ou en grillage dans le réservoir, s'étendant depuis l'orifice d'admission du gaz adsorbable jusqu'à l'extrémité opposée du réservoir.

La matière adsorbante peut être de toute nature. Des exemples de matières absorbantes préférées sont des fibres de carbone activé d'une surface spécifique d'au moins 700 m²/g, de préférence d'au moins 1000 m²/g, et d'une surface externe d'au moins 0,2 m²/g, telles que les fibres vendues sous la désignation AD'ALL par la Société japonaise OSAKA GAS Co., Ltd ou sous les désignations KF (ou K-Filter) et AF par la Société japonaise TOYOBO Co., Ltd, Osaka, Japon, des charbons actifs d'une surface spécifique d'au moins 700 m²/g, de préférence d'au moins 1000 m²/g, et d'une surface spécifique externe d'au moins 0,005 m²/g, de préférence d'au moins 0,02 m²/g, tels que les charbons vendus sous la désignation PICACTIF, référence TA 60 ou TA 90, par la Société PICA, 92309 Levallois, France.

Avantageusement, on peut mélanger un matériau bon conducteur de la chaleur avec la matière adsorbante afin d'améliorer les échanges thermiques au sein de ladite matière adsorbante et entre cette dernière et la paroi du réservoir. Un exemple préféré d'un tel matériau bon conducteur de la chaleur est du graphite expansé recomprimé. Du graphite expansé est disponible auprès de la Société LE CARBONE-LORRAINE.

Le mélange du graphite expansé recomprimé et de la matière adsorbante peut s'effectuer en comprimant d'abord du graphite expansé, par exemple dans un cylindre au moyen d'un piston, puis en imprégnant le bloc poreux de graphite expansé recomprimé obtenu avec une suspension de fines particules de matière adsorbante dans un milieu liquide (eau ou autre liquide) que l'on élimine après l'imprégnation, par exemple par chauffage contrôlé.

Les raccords rapides auto-obturants sont des articles bien connus commercialisés, par exemple par la Société STAUBLI, 74210 Faverges, France, de même que les soupapes à tare ajustable, par exemple au moyen d'un ressort à compression réglable, que l'on peut trouver, par exemple, auprès de la NUPRO COMPANY, Willoughby, Ohio (U.S.A.).

Le fonctionnement du dispositif de l'invention est très simple, il suffit, après déconnexion de la soupape, de connecter le réservoir à une source de gaz adsorbable, telle qu'une bouteille de gaz carbonique munie d'un détendeur, jusqu'à ce que la matière adsorbante ait adsorbé la quantité voulue de gaz adsorbable, ce qui peut être déterminé par simple pesée. Le temps nécessaire à la recharge dépend de divers paramètres, mais on peut déterminer facilement un temps approprié une fois pour toutes par une simple expérimentation de routine. La recharge ne demande habituellement que quelques minutes. Egalement, la plupart des producteurs de matières adsorbantes fournissent des abaques permettant de déterminer le volume de gaz adsorbé pour un couple donné de pression et de température.

La pression de recharge est uniquement limitée par la résistance mécanique du réservoir du présent dispositif et par la source de gaz adsorbable disponible. A titre indicatif, dans le cas du CO₂ comme gaz adsorbable, la pression de recharge pourrait aller de 2 à 72 bars et plus (à une température ambiante de 30°C). La quantité de froid pouvant être produite par un dispositif donné sera d'autant plus importante que la pression de gaz dans le réservoir sera plus élevée.

Une fois la recharge terminée, on déconnecte le dispositif de la source et on reconnecte la soupape et le réservoir, la soupape étant réglée à une pression d'ouverture supérieure à la pression interne régnant dans le réservoir pour éviter toute fuite de gaz intempestive.

Lorsqu'on désire produire du froid avec le dispositif, il suffit de régler la soupape à une pression d'ouverture inférieure à la pression interne régnant dans le réservoir pour que la désorption du gaz adsorbé se produise et génère des frigories qui refroidissent la paroi du réservoir. Le froid produit peut être échangé avec de l'air ou un fluide de toutes façons convenables. Par exemple, on peut faire passer un courant d'air ou de liquide à refroidir autour du réservoir à l'aide d'un ventilateur, pompe ou analogue. Les échanges thermiques peuvent être accrus, en prévoyant des moyens d'échange de chaleur connus en soi, tels que des ailettes métalliques ou similaires, autour du réservoir.

Le dispositif de l'invention est utile dans tous les domaines d'application nécessitant une source de froid légère et autonome. On peut citer, à titre purement indicatif, les vêtements réfrigérés et les réfrigérateurs portables.

La description qui va suivre, faite en se référant aux dessins, fera bien comprendre l'invention.
La figure 1 est une vue schématique d'un dispositif frigorigène selon l'invention ; et
la figure 2 est une vue schématique illustrant la recharge du dispositif de la figure 1.

Le dispositif frigorigène de l'invention comprend un réservoir cylindrique 1 en acier inoxydable d'une longueur de 165 mm, d'un diamètre intérieur de 30,5 mm et d'un diamètre extérieur de 33,7 mm, garni d'un mélange 2 de 34,7 g de charbon actif PICACTIF TA 90 et de 18,7 g de graphite expansé, d'une densité initiale de 0,04, recomprimé.

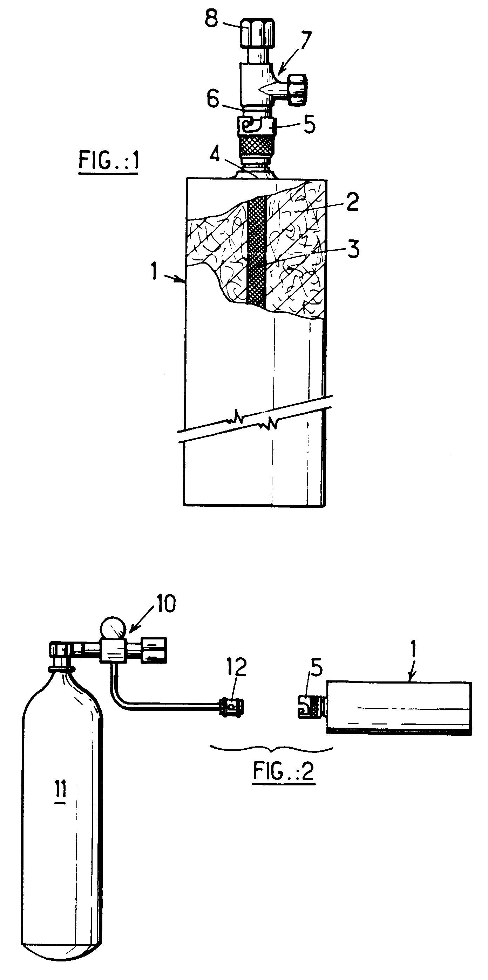

Au centre de la masse de matière adsorbante est prévu un petit cylindre 3 formé d'une grille à mailles fines, s'étendant d'une extrémité à l'autre de réservoir, destiné à ménager un accès facile du gaz adsorbable à toutes les parties de la matière adsorbante. Un orifice 4 est prévu à une des extrémités du cylindre et la partie femelle 5 d'un raccord rapide auto-obturant est soudée autour de cet orifice. La partie mâle 6 du raccord rapide est de son côté soudée à une soupape 7 dont la tare est ajustable par un bouton 8. Sur la figure 1, la partie mâle et la partie femelle du raccord sont montrées en position de raccordement.

A titre indicatif, le raccord utilisé, fourni par la Société STAUBLI, comprenait un raccord SPM 5,5 (partie femelle) et un embout SPM 5,5 (partie mâle). De son côté, la soupape à tare ajustable (entre 0 et 15 bars), de désignation 316 L, provenait de la Société américaine NUPRO. La figure 2 illustre schématiquement la recharge du dispositif de la figure 1.

Après déconnexion des deux parties 5 et 6 du raccord rapide, le réservoir 1 est relié au détendeur 10 d'une bouteille 11 de gaz adsorbable (CO₂ par exemple) sous pression, en raccordant la partie femelle 5, solidaire du réservoir 1, à une partie mâle 12 de raccord rapide, similaire à la partie mâle 6, reliée au détendeur 10. Il suffit alors d'ouvrir le détendeur pour que la recharge s'opère. Une fois la recharge terminée, on ferme le détendeur, on déconnecte les parties 5 et 12, et on reconnecte les parties 5 et 6 après avoir fermé la soupape 7.

On donne ci-après, à titre d'exemple non limitatif, les résultats de deux essais conduits avec le dispositif de la figure 1, le premier en mode de fonctionnement à pression constante, et le second en mode de fonctionnement à pression variable.

### Exemple 1 : Mode à pression constante

Le dispositif a été chargé de CO₂ jusqu'à ce que la pression interne dans l'adsorbeur soit de 8,8 bars pour une température extérieure de 13°C.

Le tarage (pression d'ouverture) de la soupape a été réglé à 1,3 bar. On a mesuré les températures T₁ et T₂ en deux endroits différents de la paroi du réservoir, l'un (T₁) situé au voisinage de l'extrémité du réservoir où se trouve l'orifice 4 du réservoir et l'autre (T₂) situé au voisinage de l'autre extrémité du réservoir 1.

Les résultats sont récapitulés dans le tableau suivant. La pression p régnant dans le réservoir a été mesurée périodiquement par un manomètre branché directement sur le réservoir.

| t(mn) | T₁ | T₂ | p |
|---|---|---|---|
| 0 | 16 | 13 | 8,77 |
| 2 | 2 | 3 | 1,31 |
| 2,5 | 3 | 1 | 1,29 |
| 3 | 1 | 0 | 1,26 |
| 3,5 | 1 | 0 | 1,25 |
| 4 | 1 | 0 | 1,25 |
| 4,5 | 1 | 0 | 1,25 |
| 5 | 2 | 0 | 1,25 |
| 5,5 | 2 | 1 | 1,25 |
| 6 | 2 | 1 | 1,25 |
| 6,5 | 2 | 1 | 1,25 |
| 7 | 3 | 2 | 1,26 |
| 7,5 | 3 | 2 | 1,26 |
| 8 | 3 | 2 | 1,26 |
| 8,5 | 4 | 3 | 1,26 |
| 9,5 | 4 | 3 | 1,29 |
| 10 | 5 | 4 | 1,3 |
| 10,5 | 5 | 4 | 1,31 |
| 11 | 5 | 4 | 1,32 |
| 12 | 6 | 5 | 1,34 |
| 13 | 6 | 5 | 1,35 |
| 14 | 7 | 6 | 1,35 |
| 15 | 7 | 6 | 1,32 |
| 16 | 7 | 6 | 1,35 |
| 17 | 7 | 6 | 1,36* |
| 18 | 8 | 7 | 1,37 |
| 19 | 8 | 7 | 1,38 |
| 20 | 8 | 7 | 1,39 |
| 21 | 8 | 7 | 1,4 |
| 24 | 9 | 12 | 1,43 |
| 25 | 10 | 12 | 1,44 |
| 50 | 12 | 11 | 1,51 |
| 85 | 13 | 11 | 1,58 |

| | | | |
|---|---|---|---|
| * fermeture de la soupape | | | |

### Exemple 2 : Mode à pression variable

Initialement, le dispositif a été chargé de CO₂ jusqu'à ce que la pression interne dans l'adsorbeur soit de 8,2 bars pour une température ambiante de 12°C.

Dans cet essai, le tarage de la soupape a été ajusté manuellement en fonction de la température de la paroi de façon à maintenir la température de la paroi au voisinage de 6-7°C.

La pression p et les températures T₁ et T₂ ont été mesurées comme décrit pour l'exemple 1. Les résultats obtenus sont récapitulés dans le tableau ci-dessous :

| t(mn) | p | T₁ | T₂ | Tamb |
|---|---|---|---|---|
| 0 | 7,86 | 12 | 12 | 12 |
| 2 | 4,55 | 8 | 8 | 12 |
| 2,5 | 4,51 | 7,5 | 8 | 12 |
| 3 | 4,52 | 7,8 | 8 | 12 |
| 3,5 | 4,52 | 8 | 8 | 12 |
| 4 | 4,51 | 8 | 8 | 12 |
| 4,5 | 4,51 | 8 | 8 | 12 |
| 5 | 4,51 | 8 | 8 | 12 |
| 6 | 4,51 | 8 | 8 | 12 |
| 6,5 | 4,35 | 7 | 7 | 12 |
| 9 | 3,18 | 6 | 7 | 12 |
| 9,5 | 3,17 | 6 | 7 | 12 |
| 10 | 3,17 | 6 | 7 | 12 |
| 11 | 3,17 | 6 | 7 | 11 |
| 12 | 3,17 | 6 | 7 | 11 |
| 13 | 2,85 | 6 | 7 | 11 |
| 14 | 2,77 | 6 | 7 | 11 |
| 15 | 2,72 | 6 | 7 | 11 |
| 16 | 2,7 | 6 | 7 | 11 |
| 17 | 2,68 | 6 | 7 | 11 |
| 18 | 2,68 | 6 | 7 | 11 |
| 19,5 | 2,3 | 6 | 7 | 11 |
| 20 | 2,16 | 5 | 6 | 11 |
| 21 | 2,07 | 5 | 6 | 11 |
| 22 | 2,01 | 5 | 6 | 11 |
| 24 | 1,97 | 5 | 6 | 11 |
| 25 | 1,96 | 5 | 6 | 11 |
| 26 | 1,94 | 5 | 6 | 11 |
| 27 | 1,55 | 5 | 6 | 11 |
| 28 | 1,46 | 4 | 5 | 11 |
| 29 | 1,4 | 4 | 5 | 11 |
| 30 | 1,37 | 4 | 5 | 11 |
| 32 | 1,31 | 4 | 5 | 11 |
| 35 | 1,26 | 4 | 6 | 11 |
| 36 | 1,29 | 5 | 6 | 11 |

En comparant les résultats obtenus dans les exemples 1 et 2, on voit que le mode à pression constante permet d'obtenir un refroidissement relativement fort pendant un temps relativement bref, tandis que le mode à pression variable permet d'obtenir un refroidissement de moindre amplitude mais plus durable.

Il va de soi que le mode de réalisation décrit n'est qu'un exemple et l'on pourrait le modifier, notamment par substitution d'équivalents techniques, sans sortir pour cela du cadre de l'invention, tel que défini par les revendications.

## Revendications

1. Procédé de production de froid par désorption d'un gaz pressurisé préalablement adsorbé dans une matière adsorbante contenue dans un réservoir, caractérisé en ce qu'on désorbe le gaz sous une pression contrôlée supérieure à la pression atmosphérique et en ce que le gaz désorbé est déchargé à l'atmosphère ou capté dans un piège.

2. Procédé selon la revendication 1, caractérisé en ce que le gaz adsorbable est du dioxyde de carbone.

3. Procédé selon la revendication 1 ou 2, caractérisé en ce que le gaz est désorbé à une pression sensiblement constante.

4. Procédé selon la revendication 1 ou 2, caractérisé en ce que le gaz est désorbé à une pression variable dont la variation est régulée en fonction d'une température donnée.

5. Procédé selon la revendication 1, caractérisé en ce que la matière adsorbante est mélangée avec une matière bonne conductrice de la chaleur.

6. Procédé selon l'une quelconque des revendications 1 à 5, caractérisé en ce que le gaz adsorbable est l'un des constituants d'un système à plusieurs substances adsorbées.

7. Dispositif frigorigène comprenant un réservoir (1) tenant la pression garni d'une matière adsorbante (2), dans lequel le froid est produit par désorption d'un gaz préalablement adsorbé dans ladite matière adsorbante, caractérisé en ce qu'il comprend, en outre, une soupape (7) à tare ajustable dont le passage communique, d'une part, avec l'intérieur du réservoir et, d'autre part, directement avec l'extérieur, et des moyens (5, 6) pour mettre ledit réservoir temporairement en communication avec une source (10, 11) sous pression de gaz adsorbable par ladite matière adsorbante.

8. Dispositif selon la revendication 7, caractérisé en ce que lesdits moyens consistent en un raccord rapide du type auto-obturant en deux parties dont une des parties est fixée au réservoir et l'autre partie est fixée à la soupape, de façon que le réservoir puisse être déconnecté de la soupape et connecté à ladite source sous pression pour être rempli de gaz adsorbable.

9. Dispositif selon la revendication 7 ou 8, caractérisé en ce que ladite source est une source de dioxyde de carbone.

10. Dispositif selon la revendication 7, 8 ou 9, caractérisé en ce que la matière adsorbante est choisie parmi des fibres de carbone activé et des charbons actifs.

11. Dispositif selon l'une quelconque des revendications 7 à 10, caractérisé en ce qu'il comprend, en outre, un petit tube perforé ou en grillage (3) s'étendant de l'orifice d'admission du gaz adsorbable, prévu à une extrémité du réservoir, jusqu'à l'extrémité opposée du réservoir.

12. Dispositif selon la revendication 7 ou 10, caractérisé en ce que la matière adsorbante est mélangée avec une matière bonne conductrice de la chaleur.

## Patentansprüche

1. Verfahren zur Erzeugung von Kälte durch Desorption eines unter Druck stehenden Gases, das zuvor in einem in einem Behälter enthaltenen adsorbierenden Material adsorbiert wurde, dadurch gekennzeichnet, daß man das Gas unter einem gesteuerten Druck desorbiert, der über dem atmosphärischen Druck liegt, und daß das desorbierte Gas in die Atmosphäre abgelassen oder in einer Falle aufgefangen wird.

2. Verfahren nach Anspruch 1, dadurch gekennzeichnet, daß das adsorbierbare Gas Kohlendioxid ist.

3. Verfahren nach Anspruch 1 oder 2, dadurch gekennzeichnet, daß das Gas bei einem im wesentlichen konstanten Druck desorbiert wird.

4. Verfahren nach Anspruch 1 oder 2, dadurch gekennzeichnet, daß das Gas bei einem veränderlichen Druck desorbiert wird, dessen Änderung in Abhängigkeit von einer gegebenen Temperatur reguliert wird.

5. Verfahren nach Anspruch 1, dadurch gekennzeichnet, daß das adsorbierende Material mit einem gut wärmeleitenden Material gemischt wird.

6. Verfahren nach einem der Ansprüche 1 bis 5, dadurch gekennzeichnet, daß das adsorbierbare Gas eines der Bestandteile eines Systems von mehreren adsorbierten Substanzen ist.

7. Kühlvorrichtung, bestehend aus einem druckfesten Behälter (1), der mit einem adsorbierenden Material (2) gefüllt ist und in dem die Kälte durch Desorption eines zuvor in diesem adsorbierenden Material adsorbierten Gases erzeugt wird, dadurch gekennzeichnet, daß sie außerdem ein Ventil (7) mit einstellbarer Vorspannung aufweist, dessen Durchgang einerseits mit dem Inneren des Behälters und andererseits direkt mit dem Äußeren in Verbindung ist, sowie Mittel (5, 6) zur zeitweiligen Verbindung des Behälters mit einer unter Druck stehenden Quelle (10, 11) für ein von diesem adsorbierenden Material adsorbierbares Gas.

8. Vorrichtung nach Anspruch 7, dadurch gekennzeichnet, daß diese Mittel aus einer zweiteiligen selbstschließenden Schnellkupplung bestehen, von der ein Teil am Behälter und der andere Teil am Ventil befestigt ist, so daß der Behälter vom Ventil getrennt und an die unter Druck stehende Quelle angeschlossen werden kann, um mit adsorbierbarem Gas gefüllt zu werden.

9. Vorrichtung nach Anspruch 7 oder 8, dadurch gekennzeichnet, daß die Quelle eine Kohlendioxidquelle ist.

10. Vorrichtung nach Anspruch 7, 8 oder 9, dadurch gekennzeichnet, daß das adsorbierende Material aus Fasern aus aktiviertem Kohlenstoff und Aktivkohlen ausgewählt ist.

11. Vorrichtung nach einem der Ansprüche 7 bis 8, dadurch gekennzeichnet, daß sie außerdem ein kleines perforiertes Rohr oder ein Gitterrohr (3) aufweist, das sich von der an einem Ende des Behälters vorgesehenen Einlaßöffnung für das adsorbierbare Gas bis zum entgegengesetzten Ende des Behälters erstreckt.

12. Vorrichtung nach Anspruch 7 oder 10, dadurch gekennzeichnet, daß das adsorbierende Material mit einem gut wärmeleitenden Material gemischt ist.

## Claims

1. A method for producing cold by desorption of a pressurized gas previously adsorbed in an adsorbent material held in a container, characterized in that the gas is desorbed under a controlled pressure greater than atmospheric pressure and in that the desorbed gas is discharged to atmosphere or captured in a trap.

2. The method as claimed in claim 1, characterized in that the adsorbable gas is carbon dioxide.

3. The method as claimed in claim 1 or 2, characterized in that the gas is desorbed at a substantially constant pressure.

4. The method as claimed in claim 1 or 2, characterized in that the gas is desorbed at a variable pressure, the variation of which is regulated as a function of a given temperature.

5. The method as claimed in claim 1, characterized in that the adsorbent material is mixed with a material which is a good heat conductor.

6. The method as claimed in any one of claims 1 to 5, characterized in that the adsorbable gas is one of the constituents of a system having several adsorbed substances.

7. A refrigerating device comprising a pressure-resistant container (1) furnished with an adsorbent material (2), in which cold is produced by desorbing a gas previously adsorbed in said adsorbing material, characterized in that it furthermore comprises an adjustably set valve (7) whose passage communicates, on the one hand, with the inside of the container and, on the other hand, directly with the outside, and means (5, 6) for bringing said container temporarily into communication with a pressurized source (10, 11) of gas which can be adsorbed by said adsorbent material.

8. The device as claimed in claim 7, characterized in that said means consist of a two-part quick-action coupling of the self-sealing type, one of the parts of which is fixed to the container and the other part is fixed to the valve, so that the container can be disconnected from the valve and connected to said pressurized source in order to be filled with adsorbable gas.

9. The device as claimed in claim 7 or 8, characterized in that said source is a carbon dioxide source.

10. The device as claimed in claim 7, 8 or 9, characterized in that the adsorbent material is chosen from activated-carbon fibers and activated charcoals.

11. The device as claimed in any one of claims 7 to 10, characterized in that it furthermore comprises a small tube (3) which is perforated or made of mesh, extending from the inlet orifice for the adsorbable gas, provided at one end of the container, to the opposite end of the container.

12. The device as claimed in claim 7 or 10, characterized in that the adsorbent material is mixed with a material which is a good heat conductor.
